# EUROPEAN PATENT SPECIFICATION

(11) **EP 1 963 894 B1**
(45) Date of publication and mention of the grant of the patent: **08.07.2009**
(21) Application number: 06842517.2
(22) Date of filing: 14.12.2006
(51) Int. Cl.: G02B 3/14

(54) **PIEZOELECTRIC VARIABLE FOCUS FLUID LENS AND METHOD OF FOCUSING**
PIEZOELEKTRISCHE FLUID-LINSE MIT VARIABLEM FOKUS UND FOKUSSIERUNGSVERFAHREN
LENTILLE FLUIDE PIEZOELECTRIQUE A FOCALE VARIABLE ET PROCEDE DE FOCALISATION

(30) Priority: 16.12.2005 US 751424 P
(43) Date of publication of application: 03.09.2008
(73) Proprietor: Koninklijke Philips Electronics N.V., 5621 BA Eindhoven (NL)
(72) Inventor: DOBRUSSKIN, Christoph, NL-5621 BA Eindhoven (NL)
(74) Representative: Van Velzen, Maaike Mathilde
(86) International application number: PCT/IB2006/054846
(87) International publication number: WO 2007/069213

(56) References cited:
- WO-A-20/05096028
- GB-A- 1 327 503
- NL-A- 8 501 101

## Description

The present disclosures relate generally to variable focus lenses, and more particularly, to a piezoelectric variable focus lens and a method of making the same.

There exist a number of technical implementations of a fluid focus, for example, as discussed in WO 03/069380 and WO 2004/102253, assigned to the assignee of the present disclosure. The principle of fluid focus lenses is based on sandwiching of two liquids, one of them conductive and the other non-conductive, between transparent panes, attaching contacts, and controlling a shape of the interface between the two liquids through voltage, using electro-wetting principles. However, electro-wetting principles are not very well understood and are difficult to utilize. Accordingly, conventional fluid focus lenses have a number of challenges, for example, with respect to choice of materials, particularly the fluids used, and proper functioning under various temperature conditions.

In other prior art, the shape of the meniscus between the two fluids is altered, not using electro-wetting principles, but rather by changing the relative volume of each of the fluids using a pump. However, pump systems may be technically complicated and difficult to control.

Further prior art can be found in documents WO2005/096028A, NL 85 1101A and GB 1327503A.

Accordingly, an improved fluid focus lens and method of operating the same for overcoming the problems in the art is desired. Therefore, a fluid focus lens and method of operating same is defined in claims 1 and 22 ,respectively and in the dependent claims.
Figure 1 is a schematic cross-section view of a piezoelectric fluid focus lens according to an embodiment of the present disclosure;
Figure 2 is a cross-section view of the fluid focus lens of Figure 1 showing the meniscus having a second shape according to an embodiment of the present disclosure;
Figure 3 is a schematic cross-section view of a piezoelectric fluid focus lens according to another embodiment of the present disclosure;
Figure 4 is a cross-section view of the fluid focus lens of Figure 3 showing the meniscus having a second shape according to another embodiment of the present disclosure;
Figure 5 is a schematic cross-section view of a piezoelectric fluid focus lens according to yet another embodiment of the present disclosure;
Figure 6 is a cross-section view of the fluid focus lens of Figure 5 showing the meniscus having a second shape according to another embodiment of the present disclosure;
Figure 7 is a cross-section plan view of a piezoelectric fluid focus lens according to yet another embodiment of the present disclosure;
Figure 8 is a cross-section plan view of a piezoelectric fluid focus lens according to still another embodiment of the present disclosure;
Figure 9 is a cross section schematic block diagram view of an image capture device including a piezoelectric fluid focus lens in accordance with an embodiment of the present disclosure;
Figure 10 is a cross section schematic block diagram view of an optical scanning device including a piezoelectric fluid focus lens in accordance with another embodiment of the present disclosure; and
Figure 11 is a schematic cross-section view of a piezoelectric fluid focus lens according to yet another embodiment of the present disclosure.

In the figures, like reference numerals refer to like elements. In addition, it is to be noted that the figures may not be drawn to scale.

According to one embodiment of the present disclosures, a fluid focus lens includes a chamber with an optical axis extending through the chamber. A cylindrical element made from piezoelectric material is provided on a portion of the inside of the chamber, and attached at one side of the end of the chamber. The chamber further includes a first fluid and a second fluid in contact via a meniscus extending transverse the optical axis. The perimeter of the meniscus is fixedly located on one side of the internal surface of the cylindrical element, for example, using a suitable coating that attracts the first fluid and repels the second fluid, or vice versa. In addition, the piezoelectric material is connected to a source of electricity, or voltage potential. Changes in the source of electricity, or voltage potential, induce a change in the length of the piezoelectric material, and move the perimeter of the meniscus, thus inducing a change of the shape of the meniscus. Additional designs are also disclosed.

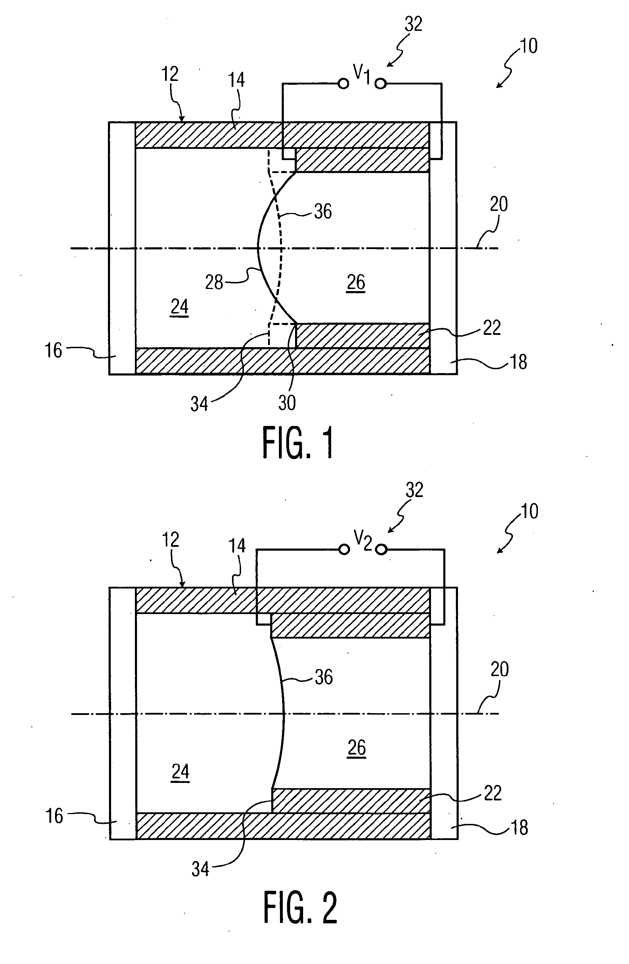

Referring now to Figure 1, a piezoelectric fluid focus lens 10 according to one embodiment of the present disclosure includes a fluid chamber 12 having side walls 14 and transparent end plates 16 and 18. Fluid chamber 12 further includes an optical axis 20 generally disposed along a length dimension of the sidewalls and extending through the chamber. A cylindrical element made from piezoelectric material 22 is provided on the inside of the chamber 12, extending partway through the chamber 12. In addition, the piezoelectric material attaches on one side, on the end plate 18 of the chamber 12.

The chamber 12 further comprises a first fluid 24 and a second, non-miscible, fluid 26 in contact via a meniscus 28. The meniscus 28 extends transverse the optical axis 20. The perimeter 30 of the meniscus 28 is fixedly located on one side of the cylindrical piezoelectric element 22. In addition, the piezoelectric element 22 couples to a source of electricity, via suitable connections, as indicated by reference numeral 32. As shown in Figure 1, the source of electricity, or voltage potential, is at V₁. Changes in this source 32, for example, from voltage V₁ to voltage V₂, induce a change in the length 34 of the piezoelectric element 22, and move the perimeter of the meniscus, thus inducing a change of the shape of the meniscus, such as indicated by the phantom line 36 in Figure 1.

In other words, a variable focus lens 10 comprises a fluid chamber 12 having an optical axis 20, a piezoelectric element 22 circumferentially disposed about the optical axis 20 within a portion of the fluid chamber12. First and second fluids, indicated by reference numerals 24 and 26, respectively, are disposed within another portion the fluid chamber 12 and in contact with one another via a meniscus 28 extending transverse the optical axis 20. The perimeter 30 of the meniscus 28 is fixedly located on a surface of the piezoelectric element 22. In addition, the first and second fluids are substantially immiscible and have different indices of refraction. In another embodiment, the first fluid comprises an insulating fluid and the second fluid comprises a conducting fluid. In yet another embodiment, the first fluid comprises a vapor and the second fluid comprises a conducting fluid.

Furthermore, application of a voltage potential 32 to the piezoelectric element 22, for example, from V₁ to V₂, controllably alters a shape of the meniscus, i.e., from a shape indicated by reference numeral 28 to a shape indicated by reference numeral 36. Figure 2 is a cross-section view of the fluid focus lens of Figure 1 showing the meniscus having a second shape according to an embodiment of the present disclosure. In particular, Figure 2 illustrates the shape of the meniscus 36 in response to application of voltage potential 32 at voltage V₂.

In another embodiment, the fluid chamber 12 comprises a substantially cylindrical chamber having a cylinder wall 14, a front element 16, and a rear element 18. The front element 16 includes a transparent portion and the rear element 18 includes a transparent portion. In one embodiment, the transparent portion can comprise the entire front element or the entire rear element. In addition, the piezoelectric element 22 can further comprise a front surface and a rear surface. In such an embodiment, the perimeter of the meniscus 30 is fixedly located on the front surface of the piezoelectric element 22. In addition, the back surface of the piezoelectric element 22 is fixedly attached to the rear element 18 of the fluid chamber 12. Furthermore, application of a voltage potential to the piezoelectric element induces a change in length of the piezoelectric element 22 in a direction parallel to the optical axis 20.

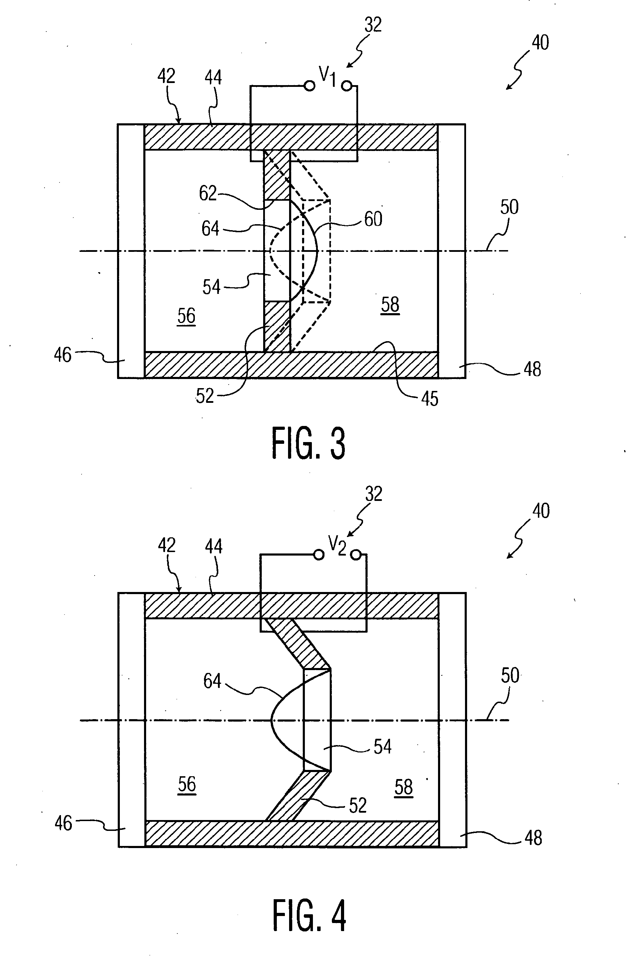

Figure 3 is a schematic cross-section view of a piezoelectric fluid focus lens 40 according to another embodiment of the present disclosure. Fluid focus lens 40 includes a fluid chamber 42 having side walls 44 and transparent end plates 46 and 48. Fluid chamber 42 further includes an optical axis 50 generally disposed along a length dimension of the sidewalls and extending through the chamber. A cylindrical element 52 made from piezoelectric material is provided on the inside of the chamber 12. In this embodiment, the piezoelectric element 52 further comprises an inner ring 54. First and second fluids, indicated by reference numerals 56 and 58, respectively, are disposed within the fluid chamber 42 and in contact with one another via a meniscus 60 extending transverse the optical axis 50.

In the embodiment of Figure 3, the perimeter of the meniscus 60 is fixedly located on the inner ring 54, for example, as indicated by reference numeral 62. In addition, the piezoelectric element 52 is fixedly coupled to an inner surface 45 of the fluid chamber 42. Furthermore, application of a voltage potential 32 to the piezoelectric element 52 induces a change in dimension of the piezoelectric element such that the inner ring 54 traverses in a direction substantially parallel to the optical axis. As shown in Figure 3, the source of electricity is at a first voltage V₁. Changes in the source 32 from the first voltage V₁ to a second voltage V₂, induces a change in dimension of the piezoelectric element 52, moves the perimeter of the meniscus, and thus induces a change of the shape of the meniscus, such as indicated by the phantom line 64 in Figure 3.

In other words, application of a voltage potential 32 to the piezoelectric element 52, for example, from V1 to V2, controllably alters a shape of the meniscus, i.e., from a shape indicated by reference numeral 60 to a shape indicated by reference numeral 64. Figure 4 is a cross-section view of the fluid focus lens of Figure 3 showing the meniscus having a second shape according to an embodiment of the present disclosure. In particular, Figure 4 illustrates the shape of the meniscus 64 in response to application of voltage potential 32 at voltage V₂.

Furthermore, with the embodiment of Figures 3 and 4, the piezoelectric element 52 is levered in such a way as to enhance the changes on the meniscus 60. This is, typical changes in piezoelectric elements are very small. For example, one such piezoelectric element may exhibit a stroke in the order of twelve µm (12 µm) for a length of thirty-one mm (31 mm). Figures 3 and 4 show one possible such construction. Piezoelectric element 52 is clamped between and fixed to sidewalls 44. Inducing a shape change will induce a leveraged expansion from a first state 60 to a second state 64. A circular hole or ring 54 cut into the middle of the piezoelectric element would hold the meniscus. The meniscus would also change from a first state 60 to a second state 64. Other similar ways to use a leverage mechanism to enhance the piezo-induced physical change of the position of a ring holding the meniscus are also possible.

Still further, in another embodiment, the piezoelectric element 52 can further comprise an inner circumferential surface and an outer surface. In such an embodiment, the perimeter 62 of the meniscus 60 is fixedly located on the inner circumferential surface. In addition, the outer circumferential surface of the piezoelectric element 52 is fixedly coupled to an inner surface 45 of the chamber 42. Furthermore, the inner circumferential surface includes a front, middle, and a rear surface of the piezoelectric element 52. The perimeter of the meniscus 62 is fixedly located on one of the front, middle, or rear surface of the piezoelectric element 52, for example, using a suitable coating that attracts the first fluid and repels the second fluid, or vice versa. Application of the voltage potential 32 to the piezoelectric element 52 induces a change in dimension of the piezoelectric element 52 in a radial direction, transverse to the optical axis 50. In addition, the outer surface of the piezoelectric element may comprise a circumferential outer surface.

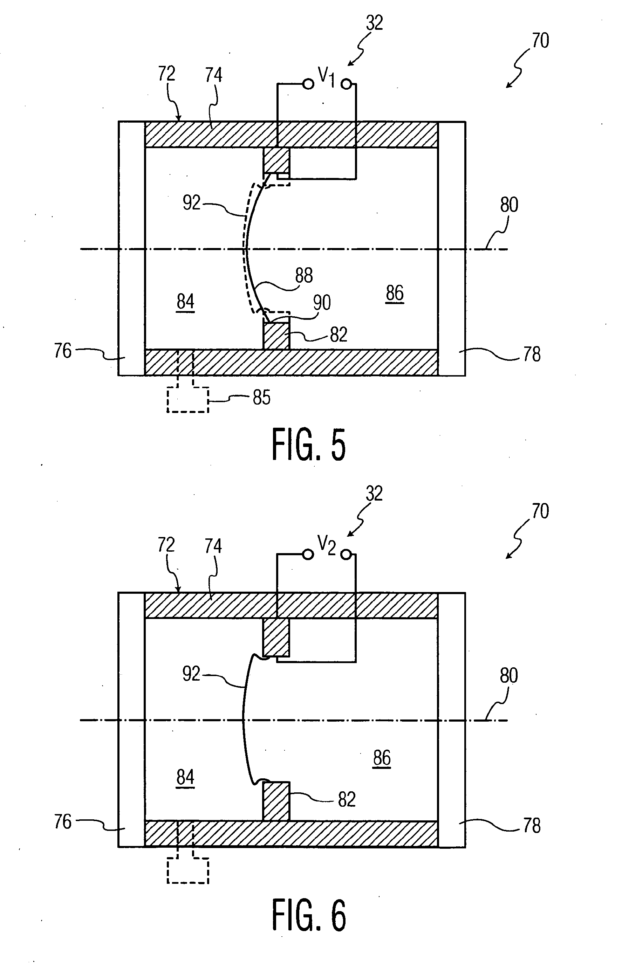

A working principle of the embodiments of the present disclosure is that the amount of fluid on each side of the meniscus remains the same so that any movement of the perimeter of the meniscus towards one or the other fluid causes the fluids to compensate by changing the shape of the meniscus. With reference now to Figure 5, there is shown a schematic cross-section view of a piezoelectric fluid focus lens 70 according to another embodiment of the present disclosure. Fluid focus lens 70 includes a fluid chamber 72 having side walls 74 and transparent end plates 76 and 78. Fluid chamber 72 further includes an optical axis 80 generally disposed along a length dimension of the sidewalls and extending through the chamber. A cylindrical element made from piezoelectric material 82 is provided on the inside of the chamber 72. First and second fluids, indicated by reference numerals 84 and 86, respectively, are disposed within the fluid chamber 72 and in contact with one another via a meniscus 88 extending transverse the optical axis 80.

In the embodiment of Figure 5, the meniscus is attached to a wall section of piezoelectric element 82 of the fluid lens 70, for example, by a coating 90 that attracts the first fluid 84 and repels the second fluid 86. Such a coating could include a hydrophilic coating, for example. The wall section of piezoelectric element 82 is designed in such a way that its diameter can be changed orthogonally to the optical axis 80 of the fluid lens 70. In other words, the wall section is made of a piezoelectric material. The change of the wall section from a first position to a second position results in the shape of the meniscus changing from a first shape 88 into a second shape 92. Furthermore, application of a voltage potential 32 to the piezoelectric element 82 induces a change in dimension of the piezoelectric element in a direction substantially transverse or orthogonal to the optical axis 80. As shown in Figure 5, the source of electricity is at a first voltage V₁. Changes in the source 32 from the first voltage V₁ to a second voltage V₂, induces a change in dimension of the piezoelectric element 80, moves the perimeter of the meniscus, and thus induces a change of the shape of the meniscus, such as indicated by the phantom line 92 in Figure 5.

Figure 6 is a cross-section view of the fluid focus lens of Figure 5 showing the meniscus having a second shape according to an embodiment of the present disclosure. In particular, Figure 6 illustrates the shape of the meniscus 92 in response to application of voltage potential 32 at voltage V₂. It is noted that the drawing figures are not necessarily drawn to scale; however, they are illustrative of the principals of the embodiments of the present disclosure. The illustrations in Figures 5 and 6 are intended to show that the fluid volumes on each side of the meniscus are basically the same.

In an alternate embodiment, the fluid focus lens could further include a suitable means configured for accommodating miniscule volume changes induced by the piezoelectric element(s). For example, a small volume of gas (as indicated, for example, by phantom lines and reference numeral 85 in Figures 5 and 6) could be introduced in communication with the fluid chamber and in a location away from (or distal) the optical path, wherein the small volume of gas provides compensation for the volume changes induced by the piezoelectric element(s). In such an embodiment, the gas is non-miscible with the fluid in which the gas contacts for providing the desired compensation. Yet another embodiment includes providing one or more portion(s) of the fluid chamber walls with elastic material (forming an elastic portion or portions), wherein the elastic portion provides compensation for miniscule volume changes induced by the piezoelectric element(s).

In the embodiments discussed herein above, the sidewalls are generally cylindrical, although some variation from a perfect cylinder is possible, e.g. slightly conical. However, the cylinder should generally remain substantially cylindrical, namely where the fluid contact layer has a linear cross section, i.e. the layer forms straight lines in a cross section of the cylinder, where the axis of the cylinder lies in the cross section. The linear cross section should be parallel to the axis of the electrode at least to within ten (10) degrees, and more preferably at least to within one (1) degree. The cylindrical sidewalls can be made using suitable tubing having a cross section which is parallel to the axis, for example, within one-tenth (0.1) degree and a smooth inner wall on which the various layers can be attached. The possibility of using such tubing provides the fluid focus lens according to the embodiments of the present disclosure with a cost advantage.

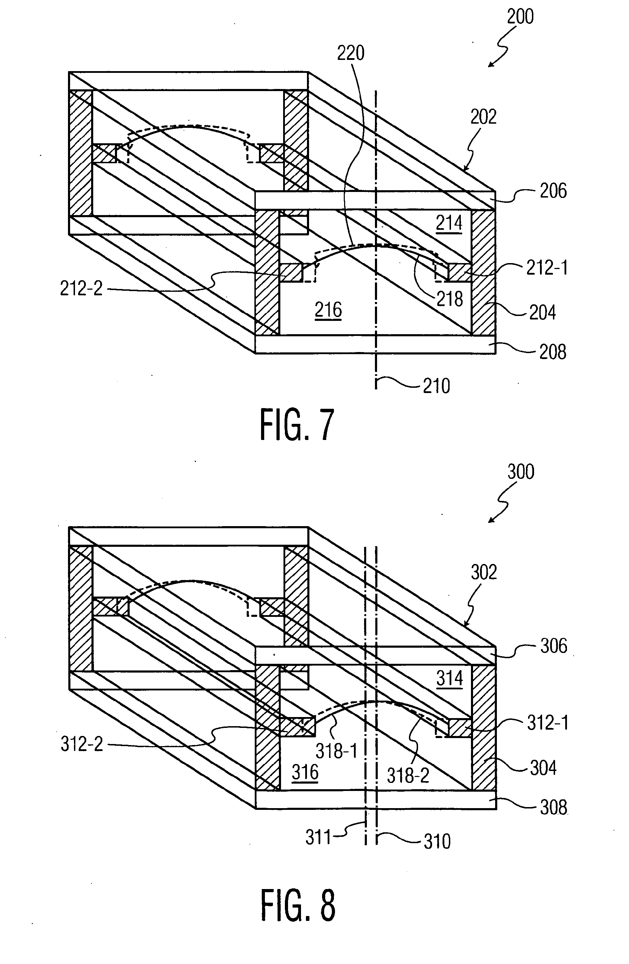

In yet another embodiment, the sidewalls are formed in a shape other than cylindrical. For example, the sidewalls can be formed of a rectangular shape as shown in Figures 7 and 8. In addition, the piezoelectric element may comprise one or more piezoelectric elements. Furthermore, various attributes of the embodiments as discussed herein with respect to the embodiments of Figures 1-6 can also be applied to the embodiments of Figures 7 and 8, as appropriate, for a given fluid focus lens application.

In Figure 7, fluid focus lens 200 includes a fluid chamber 202 having side walls 204 and transparent end plates 206 and 208. Fluid chamber 202 further includes an optical axis 210 generally disposed along a length dimension of the sidewalls and extending through the chamber. One or more elements 212-1, 212-2 made from piezoelectric material are provided on the inside of the chamber 202. First and second fluids, indicated by reference numerals 214 and 216, respectively, are disposed within the fluid chamber 202 and in contact with one another via a meniscus 218 extending transverse the optical axis 210. Upon a given activation of the piezoelectric elements 212-1, 212-2, the elements change from a first dimension to a second dimension, wherein the shape of meniscus 218 changes into another shape, as indicated by reference numeral 220.

In Figure 8, fluid focus lens 300 includes a fluid chamber 302 having side walls 304 and transparent end plates 306 and 308. Fluid chamber 302 further includes an optical axis 310 generally disposed along a length dimension of the sidewalls and extending through the chamber. First and second elements 312-1, 312-2 made from piezoelectric material are provided on the inside of the chamber 302. In this embodiment, the first and second elements 312-1 and 312-2 can be actuated independently, using suitable activation means. First and second fluids, indicated by reference numerals 314 and 316, respectively, are disposed within the fluid chamber 302 and in contact with one another via a meniscus 318 extending transverse the optical axis 310. Upon a given independent activation of the piezoelectric elements 312-1, 312-2, the elements respectively change from a first dimension to a second dimension, in a manner wherein the shape of meniscus 318 is substantially maintained, however, meniscus 318 is translated a given amount (such as indicated by translated axis 311) as determined by the change in dimension of elements 312-1, 312-2. As illustrated, element 312-1 undergoes an increase in dimension, while element 312-2 undergoes a decrease in dimension (e.g., by a substantially equivalent amount as the increase in dimension of element 312-1). In the case of a cylindrical lens, for example, the lens could then change shape in a different way, or even be shifted sideways while maintaining the same focal strength, etc.

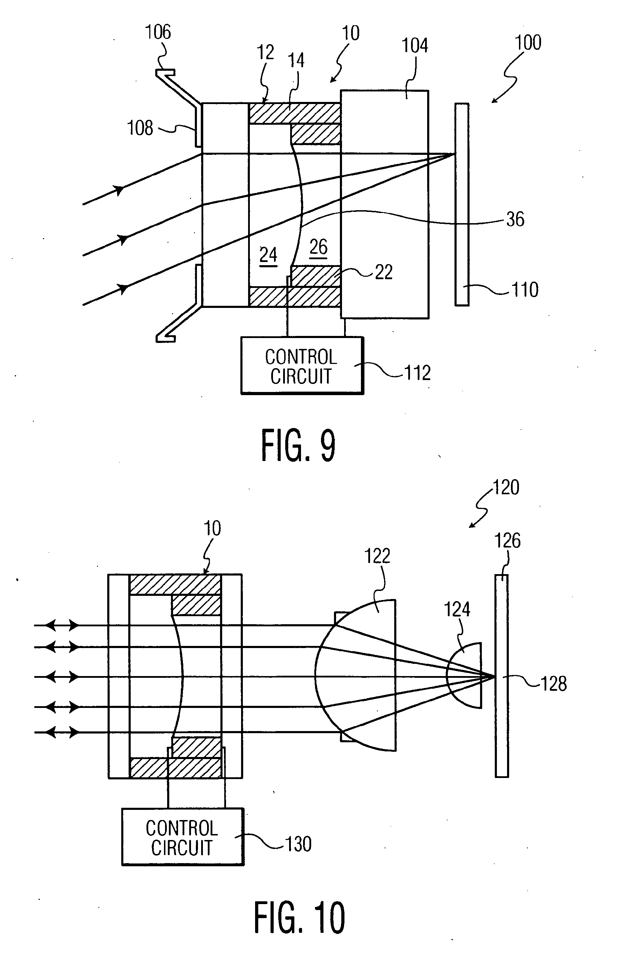

Figure 9 is a cross section schematic block diagram view of an image capture device 100 including a piezoelectric fluid focus lens 10 in accordance with an embodiment of the present disclosure. Elements similar to that described in relation to Figures 1 to 8 are provided with the same reference numerals, and the previous description of these similar elements should be taken to apply here. The device includes a compound variable focus lens 10 including cylindrical sidewalls 14, a rigid front lens 102 and a rigid rear lens 104. The space enclosed by the two lenses and the cylindrical sidewalls 14 form a cylindrical fluid chamber 12. The fluid chamber 12 holds the first and second fluids 24 and 26. The two fluids touch along a meniscus 36. The meniscus forms a meniscus lens of variable power, as previously described, depending on a voltage applied to the piezoelectric element 22. In an alternative embodiment, the two fluids 24 and 26 have changed position.

In one embodiment, the front lens 102 is a convex-convex lens of highly refracting plastic, such as polycarbonate or cyclic olefin copolymer, and having a positive power. The surfaces of the front lens are configured to provide desired initial focusing characteristics. The rear lens element 104 is formed of a low dispersive plastic, such as COC (cyclic olefin copolymer) and includes lens surfaces configured to act as a field flattener on one surface, wherein the other surface of the rear lens element may be flat, spherical or aspherical. A glare stop 106 and an aperture stop 108 are added to the front of the lens. A pixellated image sensor 110, such as a CMOS sensor array, is located in a sensor plane behind the lens.

An electronic control circuit 112 drives the meniscus lens, in accordance with a focus control signal, derived by focus control processing of the image signals, so as to provide an object range of between infinity and a few centimeters. The control circuit controls the applied voltage between a low voltage level, at which focusing on infinity is achieved, and other higher voltage levels, when closer objects are to be focused. The lens is configured such that a low, non-zero, voltage is applied to focus the lens on an object at infinity (parallel incoming rays), so as to provide the capability to focus on infinity within reasonable manufacturing tolerances, if on the other hand the lens were to be configured such that focusing on infinity occurred when zero voltage is applied, more strict manufacturing tolerances would have to be applied.

The front lens element 102 is preferably formed as a single body with a tube 14 holding the piezoelectric element 22 on its inner surface and closed off by the rear lens 104 to form a sealed unit. The second lens element 104 may be extended, in relation to that shown in Figure 9, and the flat rear surface of the lens element 104 may be replaced by an angled mirror surface, preferably angled at 45°, to allow the image sensor 110 to be placed below the lens, in order to reduce the dimensions of the lens. In addition, the fluid chamber 12 may be provided with an expansion chamber to accommodate volume changes due to thermal expansion of the fluids. The expansion chamber may be a flexible membrane in one of the walls of the fluid chamber. Furthermore, the inner surfaces of the front lens 102 and the rear lens 104 may be coated with a protective layer to avoid incompatibility of the material from which the lenses are made with the fluids 24 and 26. The protective layer may also have anti- reflection characteristics.

Figure 10 is a cross section schematic block diagram view of an optical scanning device including a piezoelectric fluid focus lens in accordance with another embodiment of the present disclosure. Figure 10 shows elements from an optical scanning device containing a lens in accordance with an embodiment of the present disclosures. The device is for recording and/or playback from an optical disk 126, for example a dual layer digital video recording (DVR) disk (see for instance the article by K. Schep, B.Stek, R. van Woudenberg, M. Blum, S. Kobayashi, T. Narahara, T. Yamagami, H.Ogawa, "Format description and evaluation of the 22.5 GB DVR disc", Technical Digest, ISOM 2000, Chitose, Japan, Sept. 5-8, 2000). The device includes a compound objective lens, for instance having a numerical aperture of 0.85, including a rigid front lens 122 and a rigid rear lens 124, for instance as described in International patent application WO 01/73775, for focusing the incoming collimated beam, for instance, having a desired wavelength, consisting of substantially parallel rays, to a spot 128 in the plane of an information layer currently being scanned.

In dual layer DVR disks, the two information layers are at depths of 0.1 mm and 0.08 mm; they are thus separated by typically 0.02 mm. When refocusing from one layer to the other, due to the difference in information layer depth, some unwanted spherical wavefront aberration arises that needs to be compensated. One way to achieve this is to change the vergence of the incoming beam using a mechanical actuator, for example moving a collimator lens in the device, which is relatively expensive. Another approach is to use a switchable liquid crystal cell, which is also a relatively expensive solution.

In this embodiment, a switchable variable focus lens 10 similar to that described in relation to Figures 1 to 8 is used. The device includes an electronic control circuit 130 for applying one of two selected voltages to the electrodes of the lens 10 in dependence on the information layer currently being scanned. In one configuration, during the scanning of the information layer depth of 0.08mm, a relatively low selected voltage is applied to produce a first meniscus curvature radius. In the other configuration, during the scanning of the information layer depth of 0.1 mm, a relatively high selected voltage is applied to produce a planar meniscus curvature. As a result, the root mean square value of the wave front aberration can be reduced. Note that a similar effect can be obtained using different combinations of meniscus curvatures, since only a variation in lens power is required. Furthermore, the difference in lens power can also be achieved with larger movements in the meniscus by making the refractive indices of the two liquids more similar.

The above embodiments are to be understood as illustrative examples. Further embodiments are envisaged. For example, the first fluid may consist of a vapor rather than an insulating liquid. The second fluid may be a fluid having a lower surface tension than the first fluid. In that case, the shape of the meniscus at low applied voltages will be convex. It is to be understood that any feature described in relation to one embodiment may also be used in other of the embodiments.

Accordingly, in one embodiment, responsive to application of a first voltage potential to the piezoelectric element, the meniscus is characterized by a first shape. In addition, responsive to application of a second voltage potential to the piezoelectric element, different from the first voltage potential, the meniscus is characterized by a second shape, different from the first shape. In one embodiment, the first shape comprises a concave shape when viewed from the second fluid and the second shape comprises a less concave shape.

In another embodiment, the first fluid has a larger refractive index than the second fluid. In addition, the variable focus lens is a compound lens, further comprising: at least one fixed lens element providing a positive lens power, such that the compound lens has a positive lens power when the meniscus is convex in relation to the first fluid.

An optical device is also contemplated that comprises a variable focus lens according to the embodiments disclosed herein. The optical device further comprises a means for defining a focusing plane with respect to the variable focus lens, wherein responsive to an input of radiation consisting.of parallel rays and a non-zero voltage potential applied to the piezoelectric element, the radiation is focused on the focusing plane. The embodiments further contemplate an image capture device comprising a variable focus lens as disclosed and discussed herein. Still further, the embodiments still further contemplate an optical scanning device for scanning an optical record carrier, comprising a variable focus lens according to the various embodiments disclosed herein.

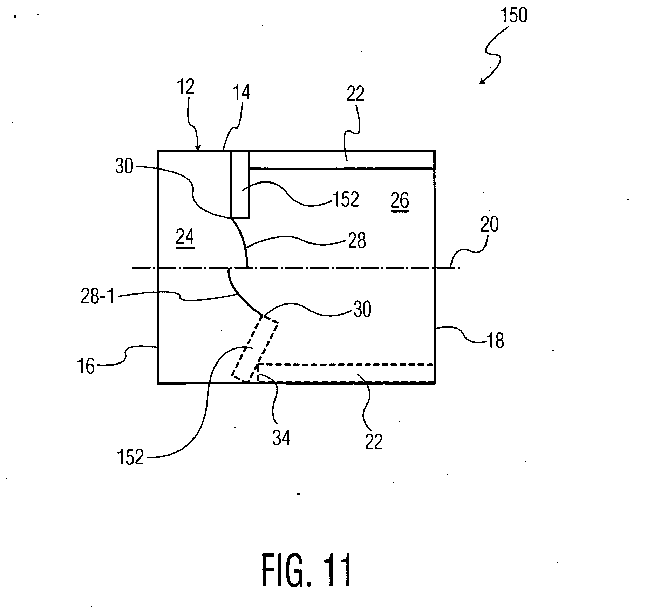

Referring now to Figure 11, a piezoelectric fluid focus lens 150 according to another embodiment of the present disclosure includes a fluid chamber 12, side walls 14, transparent end plates 16 and 18, and an optical axis 20, similar as discussed herein with respect to the embodiment of Figure 1. One or more element 22 made from piezoelectric material is provided on the inside of the chamber 12, extending partway through the chamber 12. In addition, in this embodiment, the piezoelectric material attaches on one side, i.e., on the end plate 18 of the chamber 12.

The chamber 12 further comprises a first fluid 24 and a second, non-miscible, fluid 26 in contact via a meniscus 28. The meniscus 28 extends transverse the optical axis 20. The perimeter 30 of the meniscus 28 is fixedly located on a surface in relationship to one or more of the piezoelectric elements 22. In this embodiment, the surface comprises a surface of one or more intermediate elements 152. The one or more intermediate elements 152 are physically disposed between the one or more piezoelectric elements 22 and the meniscus 28.

The piezoelectric element 22 couples to a source of electricity (not shown), via suitable connections, as discussed previously with respect to the earlier embodiments. Changes in the vo ltage source, for example, from voltage V₁ to voltage V₂, induce a change in the length 34 of the piezoelectric element 22, which impart a force on the one or more intermediate elements 152 and move the perimeter 30 of the meniscus, thus inducing a change of the shape of the meniscus, such as indicated by the 28-1 in Figure 11. Note that for ease of illustration, the upper half of Figure 11 represents the shape of a portion of the meniscus 28 at voltage V₁, and the lower half of Figure 11 represents the shape of a portion of the meniscus 28-1 at voltage V₂. While only one intermediate element is illustrated in Figure 11, additional configurations using multiple intermediate elements are possible. Furthermore, one or more intermediate elements as illustrated in Figure 11 may also be applied to the embodiments of Figures 1-10, as may be appropriate for a given optical application.

Furthermore, a method of operating a variable focus lens including a fluid chamber having an optical axis, one or more piezoelectric element disposed about the optical axis within a portion of the fluid chamber, and first and second fluids disposed within another portion the fluid chamber and in contact with one another via a meniscus extending transverse the optical axis, the perimeter of the meniscus being fixedly located on a surface in relationship to the one or more piezoelectric element, the first and second fluids being substantially immiscible and having different indices of refraction, comprises controlling a voltage potential applied to the one or more piezoelectric element to change one or more of (i) the shape of the meniscus or (ii) a translation of the meniscus. Controlling the voltage potential can include varying the voltage potential to produce a meniscus shape that is concave when viewed from the second fluid. Controlling the voltage potential can also include varying the voltage potential to produce a meniscus shape that is convex when viewed from the second fluid.

Although only a few exemplary embodiments have been described in detail above, those skilled in the art will readily appreciate that many modifications are possible in the exemplary embodiments without materially departing from the novel teachings and advantages of the embodiments of the present disclosure. For example, the embodiments of the present disclosure can be applied to fluid lens applications such as in camera phones, photo and video cameras, optical pickup devices, medical equipment, identification applications, automotive applications, and lighting applications, such as LED illumination. The lens can further be of any optical element shape, including other than cylindrical, as appropriate for the requirements of a given optical application. In addition, the embodiments of the present disclosure reduce the need for moving optical elements and provide for a number of advantages, for example, one or more of durability, simplicity, speed, and cost. Moreover, the embodiments of the present disclosure further provide for robustness, using proven principles for optics and mechanics. Accordingly, all such modifications are intended to be included within the scope of the embodiments of the present disclosure as defined in the following claims. In the claims, means-plus-function clauses are intended to cover the structures described herein as performing the recited function and not only structural equivalents, but also equivalent structures.

In addition, any reference signs placed in parentheses in one or more claims shall not be construed as limiting the claims. The word "comprising" and "comprises," and the like, does not exclude the presence of elements or steps other than those listed in any claim or the specification as a whole. The singular reference of an element does not exclude the plural references of such elements and vice-versa. One or more of the embodiments may be implemented by means of hardware comprising several distinct elements, and/or by means of a suitably programmed computer. In a device claim enumerating several means, several of these means may be embodied by one and the same item of hardware. The mere fact that certain measures are recited in mutually different dependent claims does not indicate that a combination of these measures cannot be used to an advantage.

## Claims

1. A variable focus lens (10) comprising:
a fluid chamber (12) having an optical axis (20);
one or more piezoelectric elements (22) disposed about the optical axis within a portion of the fluid chamber; and
first and second fluids (24,26) disposed within another portion of the fluid chamber and in contact with one another via a meniscus (28,36) extending transverse to the optical axis, the perimeter of the meniscus being fixedly located on a surface
wherein the surface comprises one or more of (i) a surface of the one or more piezoelectric element (22,52,82,212,312), or (ii) a surface of one or more intermediate elements (152), the one or more intermediate elements (152) being physically disposed between the one or more piezoelectric elements and the meniscus (28), the first and second fluids being substantially immiscible and having different indices of refraction, wherein responsive to application of one or more voltage potential to the one or more piezoelectric elements, the one or more piezoelectric elements controllably alter one or more of (i) a shape of the meniscus or (ii) a translation of the meniscus.

2. The variable focus lens of claim 1, wherein the first fluid (24) comprises an insulating fluid and the second fluid (26) comprises a conducting fluid.

3. The variable focus lens of claim 1, wherein the first fluid (24) comprises a vapor and the second fluid (26) comprises a conducting fluid.

4. The variable focus lens of claim 1, wherein the fluid chamber (12) comprises a substantially cylindrical chamber having a cylinder wall (14), a front element (16), and a rear element (18).

5. The variable focus lens of claim 4, further wherein the front element (16) includes a transparent portion and wherein the rear element (18) includes a transparent portion.

6. The variable focus lens of claim 5, wherein the piezoelectric element (22) further comprises a front surface (34) and a rear surface, further wherein the perimeter of the meniscus is fixedly located on the front surface and wherein the back surface of the piezoelectric surface is fixedly attached to the rear element (18).

7. The variable focus lens of claim 6, further wherein application of the voltage potential (32) to the piezoelectric element induces a change in length of the piezoelectric element in a direction parallel to the optical axis.

8. The variable focus lens of claim 1, wherein the piezoelectric element (52) further comprises an inner ring (54), further wherein the perimeter (62) of the meniscus (60,64) is fixedly located on the inner ring and wherein the piezoelectric element is fixedly coupled to an inner surface (45) of the chamber.

9. The variable focus lens of claim 8, further wherein application of the voltage potential (32) to the piezoelectric element induces a change in dimension of the piezoelectric element such that the inner ring traverses in a direction substantially parallel to the optical axis.

10. The variable focus lens of claim 1, wherein the piezoelectric element (82) further comprises an inner circumferential surface (90) and an outer circumferential surface, further wherein the perimeter of the meniscus (88,92) is fixedly located on the inner circumferential surface and wherein the outer circumferential surface of the piezoelectric element is fixedly coupled to an inner surface of the chamber (74).

11. The variable focus lens of claim 10, further wherein the inner circumferential surface includes a front, a middle, and a rear surface of the piezoelectric element (82), and wherein the perimeter of the meniscus is fixedly located on one of the front, middle, or rear surface of the piezoelectric element.

12. The variable focus lens of claim 10, further wherein application of the voltage potential (32) to the piezoelectric element induces a change in dimension of the piezoelectric element in a radial direction, transverse to the optical axis.

13. The variable focus lens of claim 1, wherein the piezoelectric element (82) further comprises an inner surface and an outer surface, the inner surface including a front, a middle, and a rear surface, further wherein the perimeter of the meniscus is fixedly located on one of the front, middle or rear surface of the inner surface and wherein the outer surface of the piezoelectric surface is fixedly coupled to an inner surface of the chamber.

14. The variable focus lens of claim 13, further wherein application of the voltage potential (32) to the piezoelectric element induces a change in dimension of the piezoelectric element in a radial direction, transverse to the optical axis.

15. The variable focus lens of claim 1, wherein responsive to application of a first voltage potential to the piezoelectric element, the meniscus is **characterized by** a first shape, and further wherein responsive to application of a second voltage potential to the piezoelectric element, different from the first voltage potential, the meniscus is **characterized by** a second shape, different from the first shape.

16. The variable focus lens of claim 15, wherein the first shape comprises a concave shape when viewed from the second fluid and the second shape comprises a less concave shape.

17. The variable focus lens of claim 1, wherein the first fluid (24) has a larger refractive index than the second fluid (26) and wherein the variable focus lens is a compound lens further comprising:
at least one fixed lens element providing a positive lens power, such that the compound lens has a positive lens power when the meniscus is convex in relation to the first fluid.

18. An optical device comprising a variable focus lens (10) according to claim 1, the optical device further comprising:
means for defining a focusing plane with respect to the variable focus lens, wherein responsive to an input of radiation consisting of parallel rays and a non-zero voltage applied to the piezoelectric element, the radiation is focused on the focusing plane.

19. An image capture device (100) comprising a variable focus lens according to claim 1.

20. An optical scanning device (120) for scanning an optical record carrier, comprising a variable focus lens according to claim 1.

21. A method of operating a variable focus lens (10) including a fluid chamber (12) having an optical axis (20), one or more piezoelectric elements (22) disposed about the optical axis within a portion of the fluid chamber, and first and second fluids (24,26) disposed within another portion of the fluid chamber and in contact with one another via a meniscus (28,36) extending transverse to the optical axis, the perimeter of the meniscus being fixedly located on a surface, wherein the surface comprises one or more of (i) a surface of the one or more piezoelectric elements or (ii) a surface of one or more intermediate elements, the one or more intermediate elements being physically disposed between the one or more piezoelectric elements and the meniscus, the first and second fluids being substantially immiscible and having different indices of refraction, the method comprising:
controlling a voltage potential (32) applied to the one or more piezoelectric elements to change one or more of (i) the shape of the meniscus or (ii) a translation of the meniscus.

22. The method of claim 21, wherein controlling the voltage potential comprises varying the voltage potential to produce a meniscus shape that is concave when viewed from the second fluid.

23. The method of claim 21, wherein controlling the voltage potential comprises varying the voltage potential to produce a meniscus shape that is convex when viewed from the second fluid.

## Patentansprüche

1. Linse (10) mit variablem Fokus, mit:
einer Fluidkammer (12) mit einer optischen Achse (20);
einem oder mehreren piezoelektrischen Elementen (22), die um die optische Achse innerhalb eines Teils der Fluidkammer angeordnet sind; sowie
einem ersten und einem zweiten Fluid (24,26), die innerhalb eines anderes Teils der Fluidkammer angeordnet und über einen sich quer zu der optischen Achse erstreckenden Meniskus (28,36) in Kontakt miteinander sind, wobei der Perimeter des Meniskus fest auf einer Oberfläche vorgesehen ist, wobei die Oberfläche eine oder mehrere Oberflächen (i) einer Oberfläche des einen oder der mehreren piezoelektrischen Elemente (22,52,82,212,312) oder (ii) einer Oberfläche eines oder mehrerer Zwischenelemente (152) aufweist, wobei das eine oder die mehreren Zwischenelemente zwischen dem einen oder den mehreren piezoelektrischen Elementen und dem Meniskus (28) physikalisch angeordnet sind, wobei das erste und zweite Fluid im Wesentlichen nicht mischbar sind und unterschiedliche Brechungsindizes aufweisen, wobei, in Reaktion auf das Anlegen eines oder mehrerer Spannungspotentiale an das eine oder die mehreren piezoelektrischen Elemente, das eine oder die mehreren piezoelektrischen Elemente eine oder mehrere (i) Formen des Meniskus oder (ii) eine Translation des Meniskus steuerbar verändern.

2. Linse (10) mit variablem Fokus nach Anspruch 1, wobei das erste Fluid (24) ein isolierendes Fluid und das zweite Fluid (26) ein leitendes Fluid umfasst.

3. Linse mit variablem Fokus nach Anspruch 1, wobei das erste Fluid (24) einen Dampf und das zweite Fluid (26) ein leitendes Fluid umfasst.

4. Linse mit variablem Fokus nach Anspruch 1, wobei die Fluidkammer (12) eine im Wesentlichen zylindrische Kammer mit einer zylindrischen Wand (14), ein vorderes Element (16) und ein rückwärtiges Element (18) umfasst.

5. Linse mit variablem Fokus nach Anspruch 4, wobei weiterhin das vordere Element (16) einen transparenten Teil enthält, und wobei das rückwärtige Element (18) einen transparenten Teil enthält.

6. Linse mit variablem Fokus nach Anspruch 5, wobei das piezoelektrische Element (22) weiterhin eine vordere Fläche (34) und eine rückwärtige Fläche umfasst, wobei weiterhin der Perimeter des Meniskus auf der vorderen Fläche fest angeordnet ist, und wobei die rückwärtige Fläche der piezoelektrischen Oberfläche an dem rückwärtigen Element (18) fest angebracht ist.

7. Linse mit variablem Fokus nach Anspruch 6, wobei das Anlegen des Spannungspotentials (32) an das piezoelektrische Element eine Änderung der Länge des piezoelektrischen Elements in einer Richtung parallel zu der optischen Achse induziert.

8. Linse mit variablem Fokus nach Anspruch 1, wobei das piezoelektrische Element (52) weiterhin einen inneren Ring (54) umfasst, wobei weiterhin der Perimeter (62) des Meniskus (60,64) auf dem inneren Ring fest angeordnet ist, und wobei das piezoelektrische Element an eine Innenfläche (45) der Kammer fest gekoppelt ist.

9. Linse mit variablem Fokus nach Anspruch 8, wobei das Anlegen des Spannungspotentials (32) an das piezoelektrische Element eine Änderung der Dimension des piezoelektrischen Elements dahingehend induziert, dass sich der innere Ring in einer Richtung im Wesentlichen parallel zu der optischen Achse verschiebt.

10. Linse mit variablem Fokus nach Anspruch 1, wobei das piezoelektrische Element (82) weiterhin eine innere Umfangsfläche (90) und eine äußere Umfangsfläche umfasst, wobei weiterhin der Perimeter des Meniskus (88,92) auf der inneren Umfangsfläche fest angeordnet und die äußere Umfangsfläche des piezoelektrischen Elements an eine Innenfläche der Kammer (74) fest gekoppelt ist.

11. Linse mit variablem Fokus nach Anspruch 10, wobei weiterhin die innere Umfangsfläche eine vordere, eine mittlere und eine rückwärtige Fläche des piezoelektrischen Elements enthält, und wobei der Perimeter des Meniskus auf der vorderen, mittleren oder rückwärtigen Fläche des piezoelektrischen Elements fest angeordnet ist.

12. Linse mit variablem Fokus nach Anspruch 10, wobei weiterhin das Anlegen des Spannungspotentials (32) an das piezoelektrische Element eine Änderung der Dimension des piezoelektrischen Elements in einer radialen Richtung, quer zu der optischen Achse, induziert.

13. Linse mit variablem Fokus nach Anspruch 1, wobei das piezoelektrische Element (82) weiterhin eine Innenfläche und eine Außenfläche umfasst, wobei die Innenfläche eine vordere, eine mittlere und eine rückwärtige Fläche enthält, wobei weiterhin der Perimeter des Meniskus auf der vorderen, mittleren oder rückwärtigen Fläche der Innenfläche fest angeordnet ist, und wobei die Außenfläche der piezoelektrischen Oberfläche an eine Innenfläche der Kammer fest gekoppelt ist.

14. Linse mit variablem Fokus nach Anspruch 13, wobei weiterhin das Anlegen des Spannungspotentials (32) an das piezoelektrische Element eine Änderung der Dimension des piezoelektrischen Elements in einer radialen Richtung, quer zu der optischen Achse, induziert.

15. Linse mit variablem Fokus nach Anspruch 1, wobei, in Reaktion auf das Anlegen eines ersten Spannungspotentials an das piezoelektrische Element, der Meniskus durch eine erste Form **gekennzeichnet** ist, und wobei weiterhin, in Reaktion auf das Anlegen eines zweiten, von dem ersten Spannungspotential abweichenden Spannungspotentials an das piezoelektrische Element, der Meniskus durch eine zweite, von der ersten Form abweichende Form **gekennzeichnet** ist.

16. Linse mit variablem Fokus nach Anspruch 15, wobei die erste Form, wenn von dem zweiten Fluid aus betrachtet, eine konkave Form und die zweite Form eine weniger konkave Form umfasst.

17. Linse mit variablem Fokus nach Anspruch 1, wobei das erste Fluid (24) einen größeren Brechungsindex als das zweite Fluid (26) aufweist, und wobei die Linse mit variablem Fokus eine zusammengesetzte Linse, welche weiterhin umfasst:
mindestens ein festes Linsenelement, welches eine positive Linsenleistung vorsieht, so dass die zusammengesetzte Linse eine positive Linsenleistung aufweist, wenn der Meniskus in Relation zu dem ersten Fluid konvex ist.

18. Optische Einrichtung mit einer Linse (10) mit variablem Fokus nach Anspruch 1, wobei die optische Einrichtung weiterhin umfasst:
Mittel, um eine Fokussierebene gegenüber der Linse mit variablem Fokus zu definieren, wobei, in Reaktion auf einen Strahlungseingang, der aus parallelen Strahlen und einer an das piezoelektrische Element angelegten Spannung ungleich Null besteht, die Strahlung auf die Fokussierebene fokussiert wird.

19. Bilderfassungseinrichtung (100) mit einer Linse mit variablem Fokus nach Anspruch 1.

20. Optische Abtasteinrichtung (120) zum Abtasten eines optischen Aufzeichnungsträgers mit einer Linse mit variablem Fokus nach Anspruch 1.

21. Verfahren zum Betreiben einer Linse (10) mit variablem Fokus, welche eine Fluidkammer (12) mit einer optischen Achse (20), eine oder mehrere piezoelektrische Elemente (22), welche um die optische Achse innerhalb eines Teils der Fluidkammer angeordnet sind, sowie ein erstes und zweites Fluid (24,26) enthält, die innerhalb eines anderes Teils der Fluidkammer angeordnet und über einen sich quer zu der optischen Achse erstreckenden Meniskus (28,36) in Kontakt miteinander sind, wobei der Perimeter des Meniskus fest auf einer Oberfläche vorgesehen ist, wobei die Oberfläche eine oder mehrere (i) einer Oberfläche des einen oder der mehreren piezoelektrischen Elemente oder (ii) einer Oberfläche eines oder mehrerer Zwischenelemente aufweist, wobei das eine oder die mehreren Zwischenelemente zwischen dem einen oder den mehreren piezoelektrischen Elementen und dem Meniskus physikalisch angeordnet sind, wobei das erste und zweite Fluid im Wesentlichen nicht mischbar sind und unterschiedliche Brechungsindizes aufweisen, wobei das Verfahren umfasst:
Steuerung eines Spannungspotentials (32), welches an das eine oder mehrere piezoelektrische Elemente angelegt wird, um eine oder mehrere (i) Formen des Meniskus oder (ii) eine Translation des Meniskus zu verändern.

22. Verfahren nach Anspruch 21, wobei die Steuerung des Spannungspotentials das Variieren des Spannungspotentials umfasst, um eine Meniskusform zu erzeugen, welche, wenn von dem zweiten Fluid aus betrachtet, konkav ist.

23. Verfahren nach Anspruch 21, wobei die Steuerung des Spannungspotentials das Variieren des Spannungspotentials umfasst, um eine Meniskusform zu erzeugen, welche, wenn von dem zweiten Fluid aus betrachtet, konvex ist.

## Revendications

1. Lentille à focale variable (10) comprenant :
une chambre de fluide (12) comportant un axe optique (20) ;
un ou de multiples éléments piézoélectriques (22) disposés autour de l'axe optique à l'intérieur d'une partie de la chambre de fluide ; et
des premier et second fluides (24, 26) disposés à l'intérieur d'une autre partie de la chambre de fluide et en contact l'un avec l'autre par l'intermédiaire d'un ménisque (28, 36) s'étendant transversalement à l'axe optique, le périmètre du ménisque étant positionné de façon fixe sur une surface, dans laquelle la surface comprend un ou de multiples parmi (i) une surface du ou des multiples éléments piézoélectriques (22, 52, 82, 212, 312), ou (ii) une surface d'un ou de multiples éléments intermédiaires (152), le ou les multiples éléments intermédiaires étant disposés physiquement entre le ou les multiples éléments piézoélectriques et le ménisque (28), les premier et second fluides étant sensiblement immiscibles et possédant des indices différents de réfraction, dans laquelle, en réponse à l'application d'un ou de multiples potentiels de tension sur le ou les multiples éléments piézoélectriques, le ou les multiples éléments piézoélectriques modifient de façon contrôlée un ou de multiples parmi (i) une forme du ménisque ou (ii) une translation du ménisque.

2. Lentille à focale variable selon la revendication 1, dans laquelle le premier fluide (24) comprend un fluide isolant et le second fluide (26) comprend un fluide conducteur.

3. Lentille à focale variable selon la revendication 1, dans laquelle le premier fluide (24) comprend une vapeur et le second fluide (26) comprend un fluide conducteur.

4. Lentille à focale variable selon la revendication 1 , dans laquelle la chambre de fluide (12) comprend une chambre sensiblement cylindrique comportant une paroi cylindrique (14), un élément avant (16), et un élément arrière (18).

5. Lentille à focale variable selon la revendication 4, dans laquelle en outre l'élément avant (16) comprend une partie transparente et dans laquelle l'élément arrière (18) comprend une partie transparente.

6. Lentille à focale variable selon la revendication 5, dans laquelle l'élément piézoélectrique (22) comprend en outre une surface avant (34) et une surface arrière, dans laquelle en outre le périmètre du ménisque est positionné de façon fixe sur la surface avant et dans laquelle la surface arrière de la surface piézoélectrique est fixée de façon fixe à l'élément arrière (18).

7. Lentille à focale variable selon la revendication 6, dans laquelle en outre l'application du potentiel de tension (32) sur l'élément piézoélectrique provoque un changement de longueur de l'élément piézoélectrique dans une direction parallèle à l'axe optique.

8. Lentille à focale variable selon la revendication 1, dans laquelle l'élément piézoélectrique (52) comprend en outre un anneau intérieur (54), dans laquelle en outre le périmètre (62) du ménisque (60, 64) est positionné de façon fixe sur l'anneau intérieur et dans laquelle l'élément piézoélectrique est accouplé de façon fixe à une surface intérieure (45) de la chambre.

9. Lentille à focale variable selon la revendication 8, dans laquelle en outre l'application du potentiel de tension (32) sur l'élément piézoélectrique provoque un changement de dimension de l'élément piézoélectrique de sorte que l'anneau intérieur traverse dans une direction sensiblement parallèle à l'axe optique.

10. Lentille à focale variable selon la revendication 1, dans laquelle l'élément piézoélectrique (82) comprend en outre une surface circonférentielle intérieure (90) et une surface circonférentielle extérieure, en outre dans laquelle le périmètre du ménisque (88, 92) est positionné de façon fixe sur la surface circonférentielle intérieure et dans laquelle la surface circonférentielle extérieure de l'élément piézoélectrique est accouplée de façon fixe à une surface intérieure de la chambre (74).

11. Lentille à focale variable selon la revendication 10, dans laquelle en outre la surface circonférentielle intérieure comprend une surface avant, une surface médiane, et une surface arrière de l'élément piézoélectrique (82), et dans laquelle le périmètre du ménisque est positionné de façon fixe sur une parmi les surfaces avant, médiane ou arrière de l'élément piézoélectrique.

12. Lentille à focale variable selon la revendication 10, dans laquelle en outre l'application du potentiel de tension (32) sur l'élément piézoélectrique provoque un changement de dimension de l'élément piézoélectrique dans une direction radiale, transversalement à l'axe optique.

13. Lentille à focale variable selon la revendication 1, dans laquelle l'élément piézoélectrique (82) comprend en outre une surface intérieure et une surface extérieure, la surface intérieure comprenant une surface avant, une surface médiane et une surface arrière, dans laquelle en outre le périmètre du ménisque est positionné de façon fixe sur une parmi les surfaces avant, médiane ou arrière de la surface intérieure et dans laquelle la surface extérieure de la surface piézoélectrique est accouplée de façon fixe à une surface intérieure de la chambre.

14. Lentille à focale variable selon la revendication 13, dans laquelle en outre l'application du potentiel de tension (32) sur l'élément piézoélectrique provoque un changement de dimension de l'élément piézoélectrique dans une direction radiale, transversalement à l'axe optique.

15. Lentille à focale variable selon la revendication 1, dans laquelle, en réponse à l'application d'un premier potentiel de tension sur l'élément piézoélectrique, le ménisque est **caractérisé par** une première forme, et dans laquelle en outre, en réponse à l'application d'un second potentiel de tension sur l'élément piézoélectrique, différent du premier potentiel de tension, le ménisque est **caractérisé par** une seconde forme, différente de la première forme.

16. Lentille à focale variable selon la revendication 15, dans laquelle la première forme comprend une forme concave lorsqu'elle est vue à partir du second fluide et la seconde forme comprend une forme moins concave.

17. Lentille à focale variable selon la revendication 1, dans laquelle le premier fluide (24) possède un indice de réfraction plus important que le second fluide (26) et dans laquelle la lentille à focale variable est une lentille composée comprenant en outre :
au moins un élément de lentille fixe fournissant une puissance de lentille positive, de sorte que la lentille composée possède une puissance de lentille positive lorsque le ménisque est convexe par rapport au premier fluide.

18. Dispositif optique comprenant une lentille à focale variable (10) selon la revendication 1, le dispositif optique comprenant en outre :
des moyens pour définir un plan de focalisation par rapport à la lentille à focale variable, dans laquelle, en réponse à une entrée de rayonnement constitué de rayons parallèles et une tension non nulle appliquée sur l'élément piézoélectrique, le rayonnement est focalisé sur le plan de focalisation.

19. Dispositif de saisie d'image (100) comprenant une lentille à focale variable selon la revendication 1.

20. Dispositif de lecture optique (120) pour balayer un support d'enregistrement optique, comprenant une lentille à focale variable selon la revendication 1.

21. Procédé de operating une lentille à focale variable (10) comprenant une chambre de fluide (12) comportant un axe optique (20), un ou de multiples éléments piézoélectriques (22) disposés autour de l'axe optique à l'intérieur d'une partie de la chambre de fluide, et des premier et second fluides (24, 26) disposés à l'intérieur d'une autre partie de la chambre de fluide et en contact l'un avec l'autre par l'intermédiaire d'un ménisque (28, 36) s'étendant transversalement à l'axe optique, le périmètre du ménisque étant positionné de façon fixe sur une surface, dans lequel la surface comprend un ou de multiples parmi (i) une surface du ou des multiples éléments piézoélectriques, ou (ii) une surface d'un ou de multiples éléments intermédiaires, le ou les multiples éléments intermédiaires étant physiquement disposés entre le ou les multiples éléments piézoélectriques et le ménisque, les premier et second fluides étant sensiblement immiscibles et possédant des indices différents de réfraction, le procédé comprenant l'étape consistant à :
contrôler un potentiel de tension (32) appliqué sur le ou les multiples éléments piézoélectriques pour changer une ou de multiples parmi (i) la forme du ménisque ou (ii) une translation du ménisque.

22. Procédé selon la revendication 21, dans lequel l'étape consistant à contrôler le potentiel de tension comprend l'étape consistant à varier le potentiel de tension pour produire une forme de ménisque qui est concave lorsqu'elle est vue à partir du second fluide.

23. Procédé selon la revendication 21, dans lequel l'étape consistant à contrôler le potentiel de tension comprend l'étape consistant à varier le potentiel de tension pour produire une forme de ménisque qui est convexe lorsqu'elle est vue à partir du second fluide.
